# EUROPEAN PATENT APPLICATION

(11) **EP 0 546 765 A1**
(43) Date of publication of application: **16.06.1993**
(21) Application number: 92311038.1
(22) Date of filing: 03.12.1992
(51) Int. Cl.: B41M 3/14

(54) **Security printed documents**

(30) Priority: 07.12.1991 GB 9126132
(71) Applicant: MOORE BUSINESS FORMS, INC., Grand Island New York 14072-1697 (US)
(72) Inventor: Anderson, Mark, Seaham, Co. Durham (GB); Roseberry, Arnold John, Sunderland, Tyne and Wear (GB)
(74) Representative: Spence, Anne

(57) **Abstract**

The invention provides a document designed to prevent reproduction by xerographic copying comprising a substrate (12) printed with a background printing (20) over a substantial portion of its surface, the background printing comprising a first printed pattern, first warning printed matter (21) located within the first pattern and second warning printed matter (22) located within the first warning printed matter, the first pattern being formed from a plurality of parallel lines extending in a first direction spaced from one another with a first spacing and having a first size, the first warning printed matter having a second size different from the first size, one of the first and second sizes being such that it is readily copyable by a copier and the other being such that it will not copy with the same clarity as said one, such that on a copy the warning printed matter will be clearly distinguishable, the second warning printed matter being formed from parallel lines extending at an angle of at least 20° to the direction of the lines of the background, and preferably having substantially the same spacing as the lines of the background; all of said printing having a density less than 50% and preferably less than 20% and arranged in a pattern such that it appears to the eye that there are areas of printing (14) interspersed with blank areas (15) in a distinct pattern, the arrangement being such that the areas containing the first and second warning printed matter is substantially indistinguishable from the overall pattern when viewed by the human eye.

## Description

This invention relates to printed documents and particularly such documents designed to prevent reproduction by xerographic copying.

With the advent of readily available copying machines which can reproduce colours with fidelity, forgery of documents, for example cheques, has become a more serious problem since, if a forger can gain access to a single blank document, he can readily make numerous reproductions on such a copying machine with coloured backing details faithfully reproduced.

It is known, for example, from U.S. Patent Specification US-A-4175774 to provide a document which has portions printed with dots of such size that they are regularly copied by a copying machine and other portions printed in a warning arrangement with dots which are of smaller size and are therefore not reproduced by a copying machine. The smaller dots are printed in a sufficiently greater number so that on the original document they are substantially indistinguishable from the larger dots when viewed by the human eye and the overall background then has a substantially continuous, uniform unpatterned appearance.

It is also known from US-A-4582346 to provide a document having background printing comprising a series of parallel broken lines, a first warning security printing in the form of dots of a small size arranged as a warning word and a second security warning printing in the form of a series of parallel lines at a different angle from the lines of the background printing. When such a document is copied, the dots forming the warning mark will drop out, and one or other series of lines will tend to copy darker than the other because of directional slur. In this arrangement, although the warning mark is substantially unreadable on the original document, the overall pattern is complicated and the portions containing the warning marks are clearly distinguishable from the remainder of the background. The parallel broken lines are printed relatively densely so that it is not a good pattern to extend over the whole of a document.

GB-A-2217258 shows a background pattern of continuous spaced parallel lines and a warning mark of similar parallel lines of closer pitch and changing density.

US-A-4891666 shows a background pattern of micro symbols arranged in straight lines, with a warning mark formed of continuous straight lines alleged to be hidden therein.

US-A-4341404 has a single tone, non-resolvable by a copier, background with no distinguishable pattern, and a warning mark made of shaped symbols of copyable density.

An object of the present invention is to provide an improved security document having a background pattern in which a warning mark is interspersed so that it is substantially indistinguishable by the human eye from the background pattern but will appear if the document is copied.

In one aspect the invention provides a security document comprising background printed matter incorporating a background pattern composed of a plurality of short lines and wherein the background printed matter also includes a plurality of dots made up in the pattern of a warning mark such that the warning mark is substantially indistinguishable by eye from the remainder of the background pattern to give a unitary pattern, the relative sizes of the background pattern and warning mark printing being one (marginally) above and the other (marginally) below photocopier threshold capability such that when the security document is photocopied the warning mark will be visible on the copy.

Preferably the dots have an average size not greater than .0076 cms (3 thousandths of an inch) and the lines have a width of about 0.0076 cms. The background printed matter preferably has a density of at least 8%, preferably in the range 8 to 15%.

In another aspect, the invention provides a document designed to prevent reproduction by xerographic copying comprising a substrate printed with a background printing over a substantial portion of its surface, the background printing comprising a first printed pattern, first warning printed matter located within the first pattern and second warning printed matter located within the first warning printed matter, the first pattern being formed from a plurality of parallel lines extending in a first direction spaced from one another with a first spacing and having a first size, the first warning printed matter having a second size different from the first size, one of the first and second sizes being such that it is readily copyable by a copier and the other being such that it will not copy with the same clarity as said one, such that on a copy the warning printed matter will be clearly distinguishable, the second warning printed matter being formed from parallel lines extending at an angle of at least 20° to the direction of the lines of the background, and preferably having substantially the same spacing as the lines of the background; all of said printing having a density less than 50% and preferably less than 20% and arranged in a pattern such that it appears to the eye that there are areas of printing interspersed with blank areas in a distinct pattern, the arrangement being such that the areas containing the first and second warning printed matter is substantially indistinguishable from the overall pattern when viewed by the human eye.

Preferably the substrate is rectangular and the lines of the second warning printed matter are at an angle of at least 20° to each side, preferably at 45° to each side.

Preferably the overall pattern comprises a regular pattern such as a wavy or herringbone like pattern, with the blank areas between the printed areas occupying at least four fifths of the overall surface area. With advantage the background is printed in a single colour.

One embodiment of security document in accordance with the invention will now be described, by way of example only, with reference to the accompanying drawings of which:-
Figure 1 shows a sample cheque in accordance with the invention,
Figure 2 shows a xerographic copy of the cheque of Figure 1, and
Figure 3 is an enlargement of part of the cheque of Figure 1.

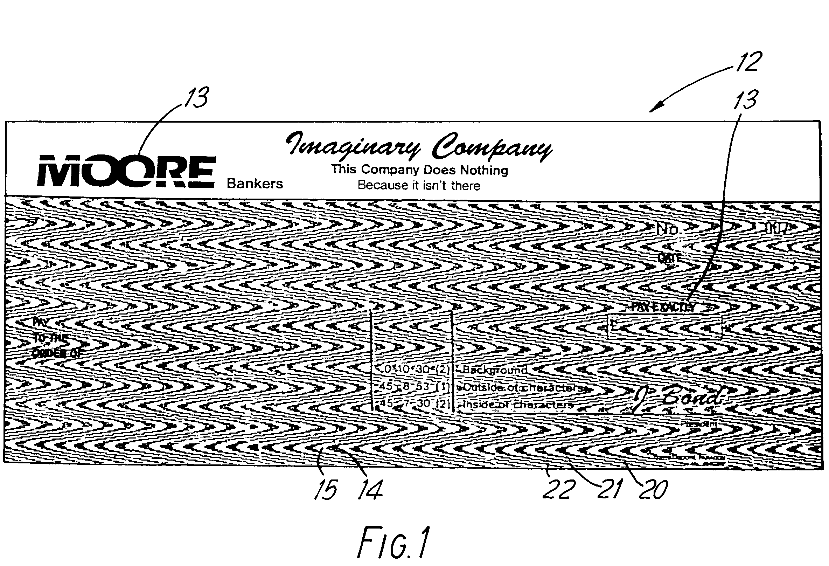

Figure 1 shows a rectangular cheque 12 having a regular pattern printed as a background over the majority of its surface area. The background is printed in half tone with a density (printed area as a percentage of blank area) less than 50%, preferably in the range 7 to 15%. The background is preferably printed in a single colour but may be multicoloured and the cheque may have printed indicia 13 printed in full tone, some over the background, to give such information as the name of the Bank, the cheque number and other instructions for completing the cheque.

The pattern, when viewed by the human eye without detailed examination, appears to be a unitary herringbone pattern of wavy printed areas 14 interspersed by wavy blank areas 15.

The printing comprises a first pattern of background printing formed by a plurality of short horizontal parallel lines 20 having a density of 10% and a spacing (pitch) of 30 lines per centimetre and a line thickness of 0.0076 cms. First warning printed matter comprises a series of dots 21 of 8% density arranged in lines at a pitch of 53 lines per centimetre, the lines making an angle of 45° with the horizontal. The dot diameter is about 0.0076 cms. Second warning printed matter comprises a series of parallel lines 22 printed at 7% density with a pitch of 30 lines per centimetre and at an angle of minus 45° with the horizontal and thus making an angle of 90° with the lines of dots.

The first warning printed matter forms the letters of the word VOID repeated several times across the background and making hollow outlines of each of the letters V,O,I and D. The second warning printed matter is located immediately inside the first warning printed matter so that it also spells out the word VOID. In the case of the letters O and D a further smaller hollow outline of the letters is formed within the second warning printed matter by further dots of the first warning printed matter and the centres of these hollow letter contain the background pattern printing lines 20.

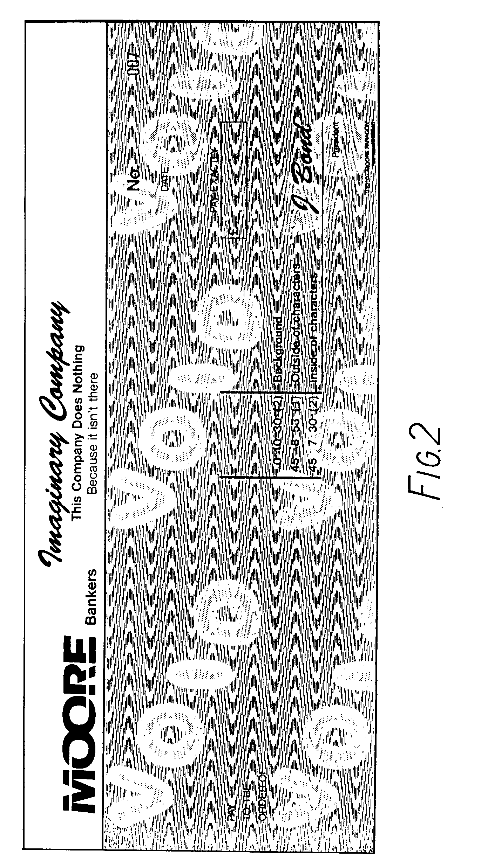

When photocopied as seen in Figure 2, since the size of the dots is below the threshold copying capability of the copier, the dots drop out so that the words VOID become clearly visible. If the copying is carried out parallel to the lines 20, the lines 22 are relatively enhanced because of directional slur, so that the words VOID become even more visible.

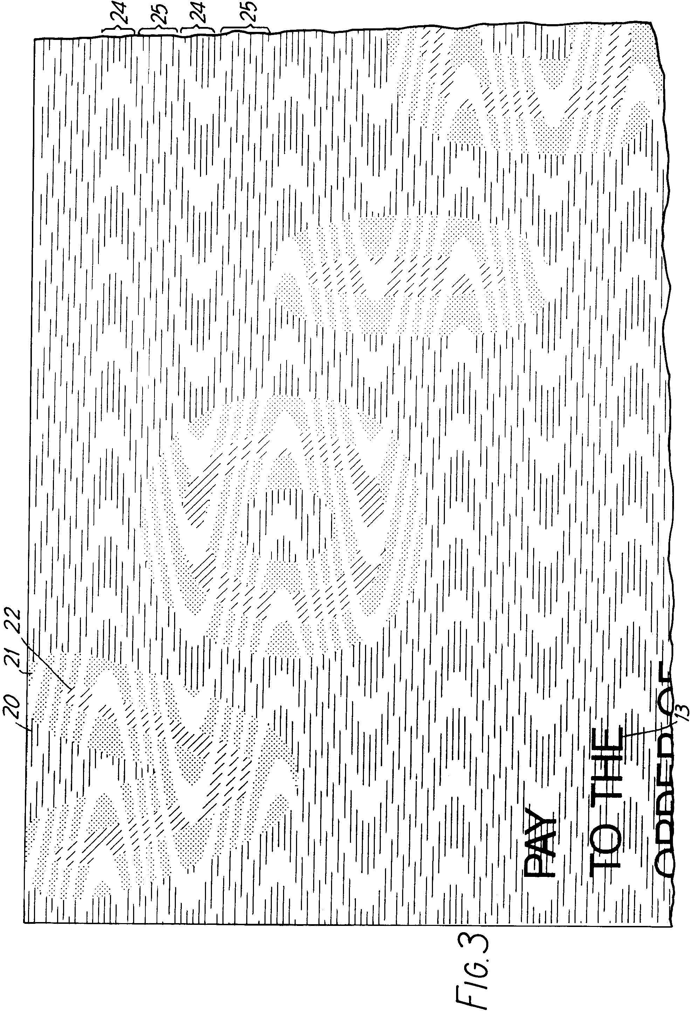

As seen in Figure 3, in the most horizontally extending portions of the printed areas 14 of the herringbone pattern, the lines 20 of one printed area 14 overlap the lines 20 of the adjacent area 14. The effect is to break up the pattern into alternate horizontally extending areas 24, 25 of different appearance.

## Claims

1. A security document comprising a substrate (12) printed with a background printing (20) over a majority of its surface, the background printing including a plurality of parallel lines (20), warning printed matter (21, 22) forming a warning mark located within the background printing so as to be substantially indistinguishable by eye from the remainder of the background printing, the relative sizes of the printing in the background and the warning mark being such that one is readily copyable by a copier and the other is such that it will not copy with the same clarity as said one, such that when the security document is photocopied the warning mark will be visible on the copy, characterised in that the background printing comprises a plurality of short lines (20) arranged in a pattern which has a non straight line appearance and the warning printed matter includes a plurality of dots (21).

2. A document designed to prevent reproduction by xerographic copying comprising a substrate printed with a background printing over a substantial portion of its surface, the background printing comprising a first printed pattern, first warning printed matter (21) located within the first pattern and second warning printed matter (22) located within the first warning printed matter, the first pattern being formed from a plurality of parallel lines (20) extending in a first direction spaced from one another with a first spacing and having a first size, the first warning printed matter (21) having a second size different from the first size, one of the first and second sizes being such that it is readily copyable by a copier and the other being such that it will not copy with the same clarity as said one, such that on a copy the warning printing matter will be clearly distinguishable, all of the printing having a density less than 20% and arranged in a pattern such that it appears to the eye that there are areas of printing (14) interspersed with blank areas (15) in a distinct pattern, the arrangement being such that the first warning printed matter is substantially indistinguishable from the overall pattern when viewed by the human eye.

3. A document according to Claim 2 in which the first warning printed matter comprises a plurality of dots.

4. A document according to Claim 1 or Claim 3 in which the dots on average have a diameter no more than 0.0076 cms.

5. A document according to any of Claims 1 to 4 in which the background printed matter has a density of at least 8%.

6. A document according to any of Claims 1 to 5 in which the background printed matter has a density less than 20%.

7. A document according to any of Claims 1 to 6 in which the background printed matter has a density of 9 to 11 %.

8. A document according to any of Claims 1 to 7 including second warning printed matter (22) located within the first warning printed matter, the second warning printed matter (22) being formed from a series of parallel lines extending at an angle of at least 20% to the direction of the lines of the background, and preferably having substantially the same spacing as the lines of the background, the second warning printed matter also being substantially indistinguishable from the overall pattern when viewed by the human eye.

9. A document according to Claim 8 into which the second warning printed matter is printed at an angle of 45° to the lines of the background.

10. A document according to any of Claims 1 to 9 in which the background pattern is a wavy or herringbone like pattern.
